# NEUE EUROPÄISCHE PATENTSCHRIFT

(11) **EP 3 081 499 B2**
(45) Veröffentlichungstag und Bekanntmachung des Hinweises auf die Entscheidung über den Einspruch: **08.02.2023**
(45) Hinweis auf die Patenterteilung: 18.10.2017
(21) Anmeldenummer: 16160121.6
(22) Anmeldetag: 14.03.2016
(51) Int. Cl.: B65B 53/06, B65G 17/00

(54) **TRANSPORTVORRICHTUNG**
TRANSPORT DEVICE
DISPOSITIF DE TRANSPORT

(30) Priorität: 14.04.2015 DE 102015105660
(43) Veröffentlichungstag der Anmeldung: 19.10.2016
(73) Patentinhaber: BVM Brunner GmbH & Co KG Verpackungsmaschinen, 72770 Reutlingen (DE)
(72) Erfinder: Löffler, Uwe, 72379 Hechingen (DE); Scharping, Gerd, 72555 Metzingen (DE)
(74) Vertreter: Kohler Schmid Möbus Patentanwälte

(56) Entgegenhaltungen:
- CA-A- 775 339
- DE-B- 1 269 564
- DE-U- 1 876 453
- US-A1- 2009 111 632

## Beschreibung

Zum Durchlauftransport von Werkstücken durch Öfen oder Schrumpftunnel für folienverpackte Gegenstände oder andere Anlagen, bei denen es darauf ankommt, dass die Unterseite der Werkstücke ebenfalls erwärmt wird, werden häufig Transportvorrichtungen mit zwei seitlichen Rollenketten, zwischen denen Stäbe angeordnet sind, verwendet.

Eine solche Transportvorrichtung ist beispielsweise in der CA 775 339 A beschrieben.

Das Werkstück wird auf den Stäben liegend durch den Ofen oder Schrumpftunnel bewegt. Durch den Zwischenraum zwischen den Stäben kann warme oder heiße Luft ungehindert hindurchströmen, auch wenn das Werkstück sehr schnell durch den Ofen oder Schrumpftunnel bewegt wird. Nachteilig ist allerdings, dass die Rollenketten dauergeschmiert werden müssen.

Aus der DE 18 76 453 U ist es außerdem bekannt, Werkstücke auf Gliederbändern mit einer Vielzahl von hinter- und nebeneinander angeordneten Gliedern zu transportieren. Diese Gliederbänder können verschleißfrei hergestellt werden. Durch die dicht aneinander liegenden Glieder ist jedoch insbesondere bei höheren Transportgeschwindigkeiten die Erwärmung der Werkstückunterseite durch heiße Luft häufig nicht ausreichend. Sollen außerdem lange und/oder schwere Werkstücke transportiert werden, so müssen diese mit der gleichen Geschwindigkeit, mit der das Gliederband läuft, auf dieses aufgeschoben werden, da die Reibung zwischen Gliederband und Werkstück relativ hoch ist.

Der vorliegenden Erfindung liegt die Aufgabe zugrunde, eine wartungsarme Transportvorrichtung bereitzustellen, mit der Werkstücke durch Öfen oder dergleichen hindurchbewegbar sind und die sicherstellt, dass auch die Unterseite der Werkstücke ausreichend erwärmt wird.

Die Aufgabe wird gelöst durch eine Transportvorrichtung mit den Merkmalen des Anspruchs 1. Die Werkstücke können je nach Größe entweder nur auf den Stäben oder auf den Stäben und den Gliederbändern aufliegen. Durch den relativ großen Abstand zwischen den Stäben kann ungehindert Wärme zur Unterseite der Werkstücke dringen, auch wenn diese schnell durch die Vorrichtung bewegt werden. Die angetriebenen Gliederbänder können wartungsarm oder sogar vollständig wartungsfrei gestaltet werden, da sie aus Kunststoff gefertigt sind, der vorzugsweise hitzebeständig ist. Die erfindungsgemäße Transportvorrichtung erfüllt somit alle aufgabengemäßen Anforderungen.

Die Enden der Stäbe können entweder fest mit den Gliederbändern verbunden sein oder frei drehbar in diesen gelagert sein. Frei drehbare Stäbe erlauben das Zuführen der Werkstücke mit beliebiger Geschwindigkeit. Für leichtere Werkstücke mit einer glatten Oberfläche sowie hohen Transportgeschwindigkeiten können dagegen feststehende Stäbe vorteilhafter sein, um eine Relativbewegung zwischen Werkstücken und Transportvorrichtung während des Transports zu verhindern.

Werden die Stäbe frei drehbar ausgeführt, so können sie auf einer Schiene aufliegen und auf dieser abrollen. Werkstücke, die nur auf den Stäben aufliegen, können dadurch mit der doppelten Geschwindigkeit wie die Gliederbänder durch die Vorrichtung zur Hitzebehandlung bewegt werden. Außerdem liegen die Werkstücke dann nicht immer an den gleichen Stellen auf den Stäben auf, sodass die gesamte Unterseite des Werkstücks gleichmäßig der Hitze ausgesetzt werden kann.

Je nach den Maßen und dem Gewicht der Werkstücke und der gewünschten Transportgeschwindigkeit können die Gliederbänder zusammen 20 % bis 50 % der Breite der Transportvorrichtung einnehmen.

Weitere Vorteile ergeben sich, wenn die Gliederbänder als Endlosbänder ausgeführt sind. Die Transportvorrichtung läuft somit vom Ende der Vorrichtung zur Hitzebehandlung des Werkstücks wieder zurück zum Eingang der Vorrichtung. Auf diesem Weg außerhalb der Vorrichtung können die Gliederbänder und Stäbe ausreichend abkühlen.

Insbesondere für den Transport breiter Werkstücke ist es vorteilhaft, dass die Stäbe in der Höhe über die Gliederbänder überstehen. Die Werkstücke liegen nur auf den Stäben auf und nicht auch auf den Gliederbändern. Die Glieder der Bänder behindern dadurch die Zirkulation von warmer Luft auf der Unterseite des Werkstücks nicht.

Die Transportvorrichtung kann vorzugsweise so ausgelegt sein, dass sie mit Geschwindigkeiten von mehr als 40 m/min durch die Vorrichtung zur Hitzeeinwirkung hindurchbewegbar ist. Dadurch ist eine rationelle Wärmebehandlung einer Vielzahl von Werkstücken möglich.

Die Transportvorrichtung ist für verschiedene Anwendungen einsetzbar. Mit der Transportvorrichtung können aber insbesondere folienverpackte Gegenstände durch einen Schrumpftunnel transportierbar sein. Die Gegenstände werden im Schrumpftunnel auch von unten mit heißer Luft beaufschlagt. Um ein gutes und gleichmäßiges Schrumpfergebnis der Folie auch auf der Unterseite des Werkstücks zu erreichen, ist es notwendig, dass die heiße Luft die Folie auf der Auflageseite des Werkstücks ungehindert erreichen kann. Dies ist bei der erfindungsgemäßen Vorrichtung durch die großen Abstände zwischen den Stäben selbst bei hohen Transportgeschwindigkeiten gewährleistet. Gleichzeitig sorgen die angetriebenen seitlichen Gliederbänder dafür, dass die Transportvorrichtung wartungsfrei ist. Ein weiterer Vorteil der relativ weit beabstandeten Stäbe besteht darin, dass diese sich auf ihrem Rückweg zwischen dem Ende des Schrumpftunnels und dem Eingang des Schrumpftunnels schneller wieder abkühlen als die mit einer Vielzahl von Gliedern versehenen Gliederbänder. Die Gefahr eines Anhaftens der Folie an der Transportvorrichtung ist dadurch geringer als bei Transportvorrichtungen, die nur aus einem Gliederband bestehen.

Die erfindungsgemäße Transportvorrichtung kann daher durch Vorrichtungen zur Hitzebehandlung mit Temperaturen von mehr als 180°C hindurchbewegt werden.

Nachfolgend wird ein bevorzugtes Ausführungsbeispiel einer erfindungsgemäßen Transportvorrichtung anhand der Zeichnung detailliert beschrieben.

Es zeigen:
- Fig. 1: eine perspektivische Ansicht einer erfindungsgemäßen Transportvorrichtung;
- Fig. 2: einen vergrößerten Ausschnitt der Transportvorrichtung aus Fig. 1.

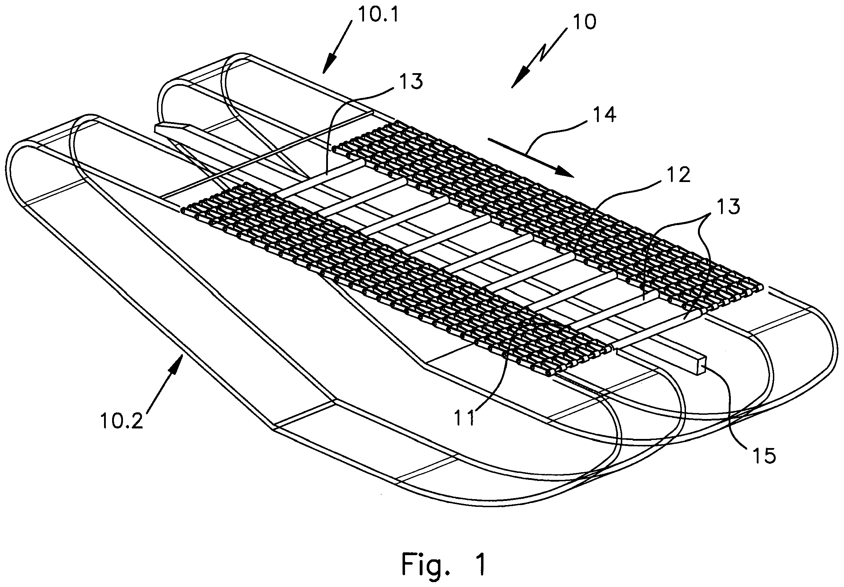

In Fig. 1 ist eine als endloses, bandförmiges System ausgeführte Transportvorrichtung 10 dargestellt, die in einem oberen Abschnitt 10.1 horizontal durch eine hier nicht dargestellte Vorrichtung zur Hitzebehandlung von Werkstücken hindurchläuft. In einem unteren Abschnitt 10.2 verläuft sie außerhalb der Vorrichtung zur Hitzebehandlung zurück.

Die Transportvorrichtung 10 wird dabei von zwei seitlichen Gliederbändern 11, 12 und diese miteinander verbindenden und quer zur Transportrichtung 14 ausgerichteten Stäben 13 gebildet.

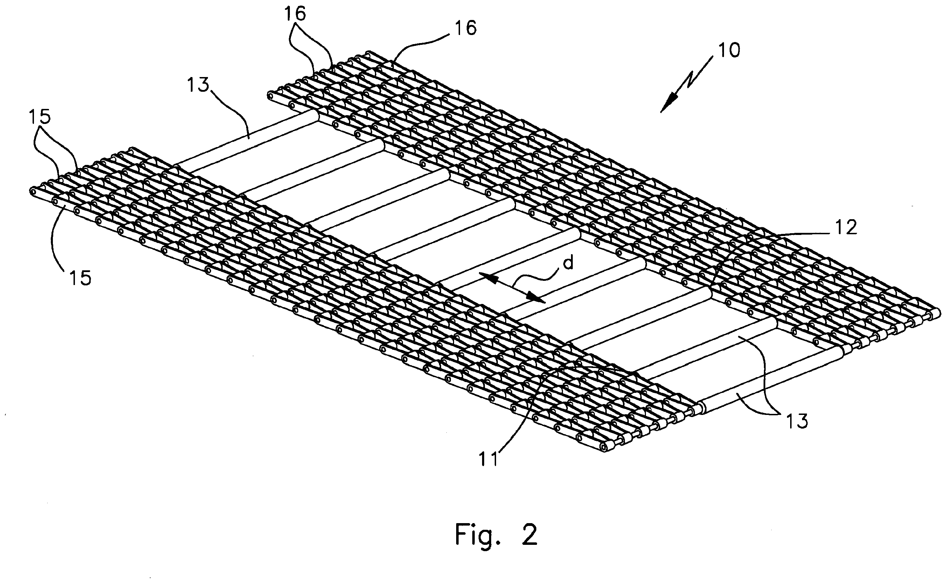

Dieser Aufbau ist in der Detaildarstellung in Fig. 2 noch besser zu erkennen. Der gegenseitige Abstand d zwischen den Stäben 13 ist relativ groß. Er muss nur klein genug sein, dass ein hier nicht näher dargestelltes Werkstück auf mindestens zweien der Stäbe 13 aufliegt. Durch den Zwischenraum zwischen den Stäben 13 kann daher heiße Luft von unten ungestört gegen das Werkstück strömen. Die seitlichen Gliederbänder 11, 12 sind von einer Vielzahl von neben- und hintereinander angeordneten Gliedern 15, 16 gebildet und werden in einer hier nicht näher dargestellten Weise angetrieben. Die Enden der Stäbe 13 sind in den seitlichen Gliederbändern 11, 12 entweder frei drehbar gelagert oder fest mit den Gliederbändern 11, 12 verbunden. Dies kann abhängig vom Gewicht und der Größe der Werkstücke sowie der gewünschten Transportgeschwindigkeit unterschiedlich gestaltet werden.

Im dargestellten Beispiel in Fig. 1 sind die Stäbe 13 frei drehbar und liegen auf einer Schiene 15 auf. Sie können somit auf der Schiene 15 abrollen und ein auf ihnen liegendes Werkstück mit einer im Vergleich zur Geschwindigkeit der Gliederbänder 11, 12 deutlich höheren Geschwindigkeit transportieren.

Die Stäbe 13 können außerdem in der Höhe über die Gliederbänder 11, 12 überstehen, sodass auch breite Werkstücke nur auf den Stäben 13 aufliegen, um die Luftzirkulation auf der Unterseite der Werkstücke zu optimieren.

## Patentansprüche

1. Transportvorrichtung zum Transport von Werkstücken durch Vorrichtungen zur Hitzebehandlung der Werkstücke mit zwei in der Transportebene seitlich angeordneten, wartungs- und schmierungsfreien Gliederbändern (11, 12), **dadurch gekennzeichnet, dass** die Gliederbänder (11, 12) durch quer zur Transportrichtung (14) verlaufende Stäbe (13) miteinander verbunden sind, wobei die Stäbe (13) in der Höhe über die Gliederbänder (11, 12) überstehen, wobei die Gliederbänder (11, 12) aus Kunststoff gefertigt sind.

2. Transportvorrichtung nach Anspruch 1, **dadurch gekennzeichnet, dass** die Enden der Stäbe (13) fest mit den Gliederbändern (11, 12) verbunden sind oder frei drehbar in diesen gelagert sind.

3. Transportvorrichtung nach Anspruch 2, **dadurch gekennzeichnet, dass** die frei drehbaren Stäbe (13) auf einer Schiene (15) aufliegen und auf dieser abrollen.

4. Transportvorrichtung nach einem der vorhergehenden Ansprüche, **dadurch gekennzeichnet, dass** die Gliederbänder (11, 12) zusammen 20 % bis 50 % der Breite der Transportvorrichtung (10) einnehmen.

5. Transportvorrichtung nach einem der vorhergehenden Ansprüche, **dadurch gekennzeichnet, dass** die Gliederbänder (11, 12) als Endlosbänder ausgeführt sind.

6. Transportvorrichtung nach einem der vorhergehenden Ansprüche, **dadurch gekennzeichnet, dass** mit der Transportvorrichtung (10) folienverpackte Gegenstände durch einen Schrumpftunnel transportierbar sind.

7. Transportvorrichtung nach einem der vorhergehenden Ansprüche, **dadurch gekennzeichnet, dass** sie mit Geschwindigkeiten von mehr als 40 m/min durch die Vorrichtung zur Hitzeeinwirkung hindurchbewegbar ist.

8. Transportvorrichtung nach einem der vorhergehenden Ansprüche, **dadurch gekennzeichnet, dass** sie durch Vorrichtungen zur Hitzebehandlung mit Temperaturen von mehr als 180°C hindurchbewegbar ist.

## Claims

1. Transport device for transporting workpieces through devices for the heat treatment of the workpieces, said device comprising two maintenance- and lubrication-free link belts (11, 12) arranged laterally in the transport plane,
**characterized in that** the link belts (11, 12) are connected to one another by rods (13) extending transversely to the transport direction (14), the rods (13) protruding in height above the link belts (11, 12), the link belts (11, 12) being made of plastics material.

2. Transport device according to claim 1, **characterized in that** the ends of the rods (13) are rigidly connected to the link belts (11, 12) or are mounted freely rotatably therein.

3. Transport device according to claim 2, **characterized in that** the freely rotatable rods (13) rest on a rail (15) and roll thereon.

4. Transport device according to any of the preceding claims,
**characterized in that** the link belts (11, 12) together occupy 20% to 50% of the width of the transport device (10).

5. Transport device according to any of the preceding claims,
**characterized in that** the link belts (11, 12) are designed as continuous belts.

6. Transport device according to any of the preceding claims,
**characterized in that** film-packaged objects can be transported through a shrink tunnel by means of the transport device (10).

7. Transport device according to any of the preceding claims,
**characterized in that** it can be moved at speeds of more than 40 m/min through the device for heat application.

8. Transport device according to any of the preceding claims,
**characterized in that** it can be moved through devices for heat treatment at temperatures of more than 180°C.

## Revendications

1. Dispositif de transport permettant de transporter des pièces à usiner à travers des dispositifs permettant le traitement thermique des pièces à usiner, comportant deux bandes transporteuses à maillons (11, 12) disposées latéralement dans le plan de transport, sans entretien et sans lubrification, **caractérisé en ce que** les bandes transporteuses à maillons (11, 12) sont reliées entre elles par des barres (13) s'étendant transversalement par rapport au sens de transport (14), les barres (13) faisant saillie en hauteur au-dessus des bandes transporteuses à maillons (11, 12), les bandes transporteuses à maillons (11, 12) étant fabriquées en plastique.

2. Dispositif de transport selon la revendication 1, **caractérisé en ce que** les extrémités des barres (13) sont reliées de manière fixe aux bandes transporteuses à maillons (11, 12) ou sont montées de manière à pouvoir pivoter librement dans celles-ci.

3. Dispositif de transport selon la revendication 2, **caractérisé en ce que** les barres (13) pouvant pivoter librement reposent sur un rail (15) et roulent sur celui-ci.

4. Dispositif de transport selon l'une des revendications précédentes,
**caractérisé en ce que** les bandes transporteuses à maillons (11, 12) occupent conjointement 20 % à 50 % de la largeur du dispositif de transport (10).

5. Dispositif de transport selon l'une des revendications précédentes,
**caractérisé en ce que** les bandes transporteuses à maillons (11, 12) sont réalisées sous la forme de bandes sans fin.

6. Dispositif de transport selon l'une des revendications précédentes,
**caractérisé en ce que** des objets emballés avec du film peuvent être transportés à travers un tunnel de rétraction au moyen du dispositif de transport (10).

7. Dispositif de transport selon l'une des revendications précédentes,
**caractérisé en ce qu'**il est mobile à travers le dispositif permettant l'action de chaleur à des vitesses supérieures à 40 m/min.

8. Dispositif de transport selon l'une des revendications précédentes,
**caractérisé en ce qu'il** est mobile à travers des dispositifs permettant le traitement thermique à des températures supérieures à 180 °C.
